# EUROPÄISCHE PATENTSCHRIFT

(11) **EP 1 568 630 B1**
(45) Veröffentlichungstag und Bekanntmachung des Hinweises auf die Patenterteilung: **09.05.2007**
(21) Anmeldenummer: 05002994.1
(22) Anmeldetag: 12.02.2005
(51) Int. Cl.: B65G 47/08, B65G 47/51

(54) **Vorrichtung zur Bildung von Stapeln**
Device for forming piles
Dispositif de formation de piles

(30) Priorität: 26.02.2004 DE 102004010567
(43) Veröffentlichungstag der Anmeldung: 31.08.2005
(73) Patentinhaber: OPTIMA filling and packaging machines GmbH, 74523 Schwäbisch Hall (DE)
(72) Erfinder: Orth, Heribert, 74532 Ilshofen (DE)
(74) Vertreter: Patentanwälte Ruff, Wilhelm, Beier, Dauster & Partner

(56) Entgegenhaltungen:
- EP-A- 0 292 378
- EP-A- 1 148 014
- US-B1- 6 170 635

## Beschreibung

Die Erfindung geht aus von einer Vorrichtung zum Bilden von Stapeln mit einer Vielzahl von einzelnen Fächern, die längs eines geschlossenen Wegs bewegt werden.

Vorrichtungen dieser Art dienen dazu, von einer Herstellungsmaschine kommende hintereinander angelieferte Gegenstände zunächst zu Stapeln zu sammeln, und anschließend diese Stapel für die Weiterbearbeitung weg zu führen, beispielsweise für eine Verpackung. Zu diesem Zweck werden die Gegenstände einzeln in ein Fach hinein bewegt, das sich längs eines geschlossenen Wegs weiter bewegt. In jedem dieser Fächer kann entweder ein einzelner Gegenstand angeordnet sein, oder aber auch mehrere Gegenstände. Beim Einführen der Gegenstände in die Fächer können die Fachwände geringfügig auseinander geklappt werden, um das Einführen zu erleichtern. Dies kann beispielsweise dadurch geschehen, dass die Kette, an der die Fachwände befestigt sind, an der Einführungsstelle um ein Umlenkzahnrad geführt wird. Dadurch entstehen zwei Abschnitte der Kette, die einen stumpfen Winkel miteinander einschließen. Damit die Fächer kontinuierlich ohne Lücke beschickt werden können, ist es sinnvoll, die Fachwände so dünn auszubilden, wie dies für ihre Funktion gerade noch sinnvoll ist. Dies gilt insbesondere dann, wenn Gegenstände aus mehreren Fächern zu einem Stapel zusammengefasst werden sollen.

Beim Herausschieben der zu Stapeln zusammengefassten Gegenstände wird ein Schieber verwendet, der an den Stirnkanten der Gegenstände angreift und diese heraus schiebt. Beim Herausschieben kann ein scheinbarer Stillstand der Fachreihe hergestellt werden. Der Schieber muss mit hoher Präzision arbeiten, da er alle zu einem Stapel gehörenden Gegenstände erfassen muss, ohne aber an einem zum nächsten Stapel gehörenden Gegenstand anzugreifen.

Bei einer bekannten Vorrichtung zur Bildung und Beförderung eines Stapels von Gegenständen (DE 3224329 C2) ist der Schieber in Bewegungsrichtung der Fachreihe gemessen deutlich länger als die entsprechende Abmessung eines Stapels. Dies bedeutet, dass diese Vorrichtung mit einem Abstand zwischen den Stapeln betrieben wird. Dies verringert die Ausbringungsleistung der Vorrichtung und hat Auswirkungen auf die Art, wie die Vorrichtung von der Eingabeseite aus befüllt wird.

Bei einer weiteren Vorrichtung dieser Art (US 6170635 B1) sind zur Trennung der Stapel sehr dicke Trennwände vorhanden, die dazu führen, dass die gesamte Vorrichtung einen höheren Platzbedarf aufweist.

Wenn ein Schieber eine falsche Anzahl von Gegenständen ausschiebt, führt dies zu einem verpackten Produkt mit einer falschen Anzahl von Gegenständen. Dieses Produkt würde beim Kunden zu einer Reklamation führen.

Der Erfindung liegt die Aufgabe zu Grunde, eine Vorrichtung zur Bildung von Stapeln zu schaffen, die bei kontinuierlicher Arbeitsweise ohne zusätzlichen Platzbedarf die Bildung von Stapeln mit der vorgesehenen Anzahl von Gegenständen und damit ein korrekt verpacktes Produkt ermöglicht.

Zur Lösung dieser Aufgabe schlägt die Erfindung eine Vorrichtung mit den im Anspruch 1 genannten Merkmalen vor. Weiterbildungen der Erindung sind Gegenstand von Unteransprüchen.

Die Erfindung schlägt also vor, an der Trennstelle zwischen zwei weiter zu bearbeitenden Stapeln den Abstand dieser Stapel von einander zu vergrößern, ohne die Dicke der Fachwand zu vergrößern und ohne ein oder mehrere Fächer freizulassen, wie dies im Stand der Technik noch vorgeschlagen wird.

Da es sich bei den zu verpackenden Produkten entweder um komprimierbare Produkte handelt, oder aber um Produkte, die mit einem gewissen Abstand voneinander angeordnet sind, lässt sich eine solche Vergrößerung des Abstands zwischen zwei zu bildenden Stapeln ohne weiteres durchführen.

Die Produkte werden in die Fächer beispielsweise in der Weise eingeschoben, wie dies im eingangs erwähnten Stand der Technik vorgesehen ist, also in einer Richtung parallel zu den Fachwänden in Richtung auf das umlaufende Getriebemittel, an dem die Fachwände angebracht sind oder durch das die Fachwände bewegt werden, wenn diese eine eigene Führung aufweisen. Die Erfindung sieht nun in Weiterbildung vor, die Einrichtung zur Vergrößerung des Abstands zwischen zwei benachbarten Stapeln so auszugestalten, dass die Produkte beim Einschieben in die Fächer durch das Einschieben die Abstandsvergrößerung bewirken. Die Abstandsvergrößerung braucht auch nur an der Stelle zu sein, an der der Schieber an den Produkten zum Ausschieben angreift. Dies ist üblicherweise die Stelle, die dem umlaufenden Getriebemittel am nächsten ist. Auf diese Weise ändert sich der Vorgang des Einschiebens der Produkte in die Fächer in keiner Weise.

Es gibt auch Fälle, wo die Produkte von oben in die Fächer gelangen, also in einer Richtung senkrecht zu der Ausschieberichtung des Schiebers. Auch in diesen Fällen kann die Abstandsvergrößerungseinrichtung so ausgebildet sein, dass die Produkte beim Einschieben oder Einfallen im Bereich ihrer dem umlaufenden Getriebemittel zugewandten Seite in ihrem Abstand vergrößert werden.

In Weiterbildung der Erfindung kann die Abstandsvergrößerungseinrichtung einen keilförmigen Abweiser aufweisen, dessen Spitze entgegengesetzt zur Einschieberichtung der Gegenstände in die Fächer gerichtet ist. Damit werden beim Einschieben die Gegenstände im Bereich ihrer in Einschieberichtung vorderen Kante zur Vergrößerung ihres Abstands seitlich bewegt. Wenn ein Stapel aus Gegenständen aus mehreren Fächern gebildet wird, brauchen diese Abweiser nicht bei jedem Fach vorhanden zu sein, sondern nur bei den Fächern, in denen die das Ende des Stapels bildenden Gegenstände angeordnet sind.

Um die Vorrichtung für die unterschiedlichsten Anwendungsfälle verwendbar zu machen, kann erfindungsgemäß in Weiterbildung vorgesehen sein, dass der Abweiser in zwei unterschiedlichen Richtungen keilförmig ausgebildet ist.

Die Erfindung schlägt in Weiterbildung vor, dass der Abweiser als mit einer Fachwand verbindbares und/oder verbundenes Aufsetzteil ausgebildet ist. Auf diese Weise lässt sich eine Vorrichtung zur Bildung von Stapeln nachträglich umrüsten, so dass schon vorhandene Anlagen nachträglich mit den Abstandsvergrößerungseinrichtungen versehen werden können. Darüber hinaus ist es auch möglich, die Vorrichtungen in der Weise umzurüsten, dass nur bestimmte Fachwände, je nach Größe des Stapels, mit den Aufsetzteilen versehen werden.

Selbstverständlich ist auch möglich, die Abweiser als Teile der Fachwände auszubilden.

Wenn der Schieber an den Kanten der Gegenstände eines Stapels angegriffen und den Stapel nur etwas verschoben hat, besteht nicht mehr die Gefahr, dass der Schieber an den nicht zu dem Stapel gehörenden Gegenständen angreift. Daher reicht es aus, dass die Abstandsvergrößerungseinrichtung nur im Bereich der Stelle wirkt, wo in eingeschobenem Zustand die Kanten der Gegenstände angeordnet sind.

Es ist aber ebenfalls möglich und liegt im Rahmen der Erfindung, den Schieber so auszugestalten, dass er an dem ersten und letzten Gegenstand jedes Stapels auch seitlich angreift, beispielsweise dadurch, dass er einen seitlichen Vorsprung an beiden Seiten aufweist. Damit kann er die Gegenstände in ihrem vorderen Bereich auch während des gesamten Ausschiebens zusammenhalten.

Weitere Merkmale, Einzelheiten und Vorzüge der Erfindung ergeben sich aus den Patentansprüchen und der Zusammenfassung, deren beider Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: schematisch eine Darstellung einer Vorrichtung zur Bildung von Stapeln;
- Figur 2: schematisch die Stirnansicht eines mit Gegenständen gefüllten Fachs;
- Figur 3: die Draufsicht auf ein zwischen zwei Fachwänden gebildetes Fach;
- Figur 4: die Stirnansicht eines Abweisers der Abstandsvergrößerungseinrichtung;
- Figur 5: eine der Figur 4 entsprechende Darstellung bei einer zweiten Ausführungsform,.
- Figur 6: die Seitenansicht der Anordnung der Figur 4;
- Figur 7: die Seitenansicht der Anordnung der Figur 5.

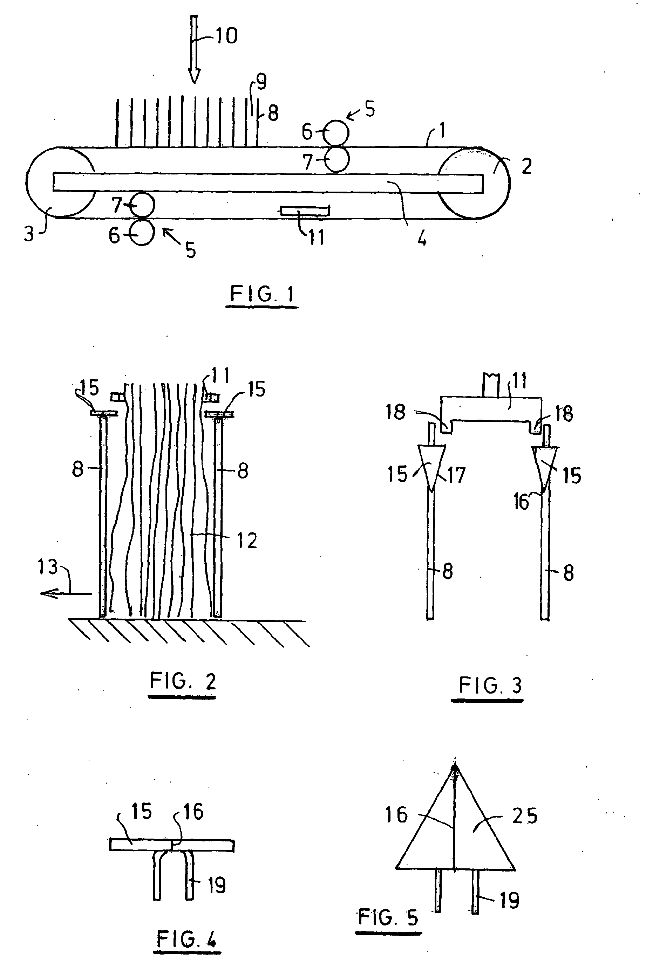

Figur 1 zeigt rein schematisch und stark vereinfacht eine Vorrichtung zur Bildung von Stapeln. Die Vorrichtung enthält ein umlaufendes Getriebemittel 1, beispielsweise eine Kette. Diese Kette ist um zwei Umlenkzahnräder 2 herum geführt, die drehbar an einer Schiene 4 gelagert sind. Zum Antrieb des umlaufenden Getriebemittels 1 dienen zwei unabhängig voneinander betätigbare Antriebe 5. Jeder Antrieb 5 besteht aus einem von einem Motor antreibbaren Zahnrad 6 und einem auf der gegenüberliegenden Seite der Kette angeordneten mitlaufenden Zahnrad 7. Wenn beide Antriebe mit gleicher Geschwindigkeit arbeiten, werden die beiden Trums der Kette gegenläufig mit gleicher Geschwindigkeit bewegt. Um einen scheinbaren Stillstand des Getriebemittels zu erreichen, ist die Schiene 4 in ihrer eigenen Längsrichtung verschiebbar gelagert. Wenn die Antriebe 5 mit unterschiedlicher Geschwindigkeit arbeiten, führt dies zu einer Verschiebung der Schiene 4.

An dem umlaufenden Getriebemittel sind Fachwände 8 befestigt, die senkrecht zu dem jeweiligen Trum verlaufen. Zwischen je zwei Fachwänden 8 ist ein Fach 9 gebildet. In die Fächer werden einzelne oder mehrere zu stapelnde Gegenstände in Richtung des Pfeils 10 eingeschoben. Das Einschieben geschieht also in Richtung auf das umlaufende Getriebemittel 1. Auf der gegenüberliegenden Seite kann dann mit Hilfe eines Schiebers 11 ein Stapel ausgeschoben werden.

Nun zu Figur 2. Figur 2 zeigt eine Ansicht eines zwischen zwei Fachwänden 8 gebildeten Fachs in Richtung des Einschiebens, wobei das Fach mit einer Vielzahl von Gegenständen 12 gefüllt ist. Die Fachwände 8 mit den Gegenständen 12 werden beispielsweise kontinuierlich in Richtung des Pfeils 13 über eine Auflagefläche 14 bewegt. An den Oberkanten der Fachwände 8 sind Abweiser 15 angebracht, die eine Abstandsvergrößerungseinrichtung bilden. Die Abweiser 15 dienen dazu, den Abstand zwischen zwei Stapeln zu vergrößern oder anders ausgedrückt, den Abstand des ersten und letzten Gegenstands eines Stapels zu verringern. Die Abweiser 15 weisen eine in Figur 2 zu sehende vordere Kante 16 auf, die später noch erläutert werden wird.

Figur 3 zeigt nun eine Draufsicht auf die Anordnung der Figur 2. Zur besseren Darstellung sind die Gegenstände 12 weg gelassen. Figur 3 zeigt also die oberen Kanten der Fachwände 8 mit den Abweisern 15 im Bereich des dem umlaufenden Getriebemittel 1 zugeordneten Endes der Fachwände 8. Die Abweiser weisen Keilform oder Dreieckform auf. Ihre Spitze 16 zeigt in die Richtung, aus der die Gegenstände in das Fach eingeschoben werden. Beim Einschieben werden die Gegenstände, die mit ihrem vorderen Kanten an den Seiten 17 der Abweiser 15 abgleiten, im Bereich dieses Endes der Fachwände nach innen gedrängt. Dadurch entsteht eine gewisse Komprimierung der Gegenstände, die dazu führt, dass der Abstand des ersten und letzten Gegenstands eines Stapels voneinander verringert wird. Dies führt zu einer sauberen Trennung zweier benachbarter Stapel. Durch diese saubere Trennung zweier benachbarter Stapel voneinander kann sichergestellt werden, dass der Schieber 11 alle Gegenstände des ihm zugeordneten Stapels ergreift, die benachbarten Stapel aber unberührt lässt.

Der Schieber 11, der in Figur 3 nur schematisch dargestellt ist, enthält im Bereich seiner beiden Enden je einen Vorsprung 18, so dass der Schieber 11, wenn er an den Kanten der Gegenstände angreift, diese Zusammenfassung des Stapels auch während des weiteren Ausschiebens beibehalten kann.

Figur 4 zeigt nun in einer vergrößerten Darstellung einen Abweiser 15 aus der gleichen Richtung wie in Figur 2. Der Abweiser 15 ist als flache Platte ausgebildet, die an ihrer Unterseite zwei abgebogene Flügel 19 aufweist, die parallel zueinander verlaufen. Auf diese Weise lässt sich der Abweiser 15 auf die Oberkante einer Fachwand 8 aufsetzen. Je nach Dimensionierung kann dies Aufsetzen auch eine Verklemmung bedeuten. Der Abweiser 15 der Figur 1 ist für den Fall gedacht, dass die Gegenstände in die Fächer 9 so eingeschoben werden, wie dies unter Bezugnahme auf Figur 1 bereits beschrieben wurde, also in Richtung auf das umlaufende Getriebemittel 1.

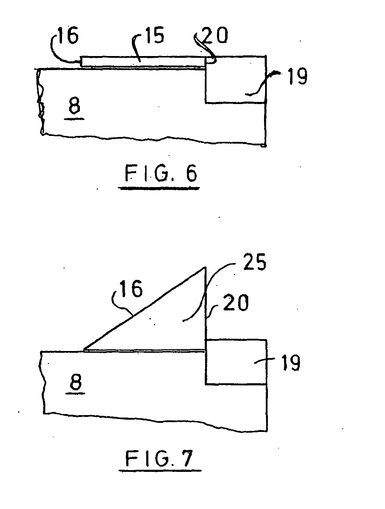

Figur 5 zeigt nun einen Abweiser 25, der auch eine Keilform aufweist, die nach oben zeigt. Die Kante 16 verläuft also von der Seite gesehen schräg nach oben. Bei diesem Abweiser kann das Einführen der Gegenstände sowohl in einer Richtung auf das umlaufende Getriebemittel 1 als auch aus einer Richtung von oben in Figur 2 in die Fächer geschehen.

Figur 6 zeigt den Abweiser der Figur 4 von der Seite her. Die die Spitze 16 aufweisende Platte liegt auf der Oberseite der Fachwand 8. Die beiden Flügel 19 sind an einer Stelle hinter der Hinterkante 20 der Platte angeordnet. Auf diese Weise wird erreicht, dass die Vorderkante der eingeschobenen Gegenstände nicht in Berührung mit den seitlichen Flügeln 19 gelangt.

Figur 7 zeigt die Seitenansicht des Abweisers 25 der Figur 5. Auch hier ist die durch die Flügel 19 gebildete Festlegeeinrichtung hinter der Hinterkante 20 des Abweisers 25 angeordnet, um auch hier dafür zu sorgen, dass die in Bewegungsrichtung vorderen Kanten der Gegenstände nicht an den Flügeln 19 zur Anlage gelangen.

Bei der Darstellung der Figuren 2 und 3 ist angenommen, dass ein Stapel aus Gegenständen nur eines Fachs gebildet wird. Es könnte auch sein, dass ein Stapel aus Gegenständen aus zwei oder mehr Fächern gebildet wird. In diesem Fall würde ein Abweiser 15, 25 nur an jeder zweiten oder jeder n-ten Fachwand 8 angeordnet sein.

## Patentansprüche

1. Vorrichtung zur Bildung von Stapeln, mit
1.1 einer Vielzahl von einzelnen Fächern (9), die
1.2 durch Fachwände (8) voneinander getrennt und
1.3 zur Aufnahme je mindestens eines insbesondere komprimierbaren Gegenstands (12) bestimmt sind und
1.4 längs eines geschlossenen Wegs bewegt werden,
1.5 einem Schieber (11), der
1.6 zum Ausschieben eines Stapels von Gegenständen quer zur Bewegungsrichtung der Fächer (9) ausgebildet ist,
**gekennzeichnet durch**
1.7 eine Einrichtung zur Vergrößerung des Abstands zwischen zwei Stapeln mindestens im Bereich des Angriffs des Schiebers (11) an den den Stapel bildenden Gegenständen (12) ohne die Dicke der Fachwand zu vergrößern.

2. Vorrichtung nach Anspruch 1, bei der die Abstandsvergrößerungseinrichtung derart ausgebildet ist, dass der Abstand der jeweils letzten Gegenstände der beiden Stapel beim Einschieben in das Fach (9) vergrößert wird.

3. Vorrichtung nach Anspruch 1 oder 2, bei der die Abstandsvergrößerungseinrichtung einen keilförmigen Abweiser (15, 25) aufweist, dessen Spitze (16) entgegengesetzt zur Einschieberichtung der Gegenstände (12) in die Fächer (9) zeigt.

4. Vorrichtung nach Anspruch 3, bei der die der Abweiser (25) keilförmig in zwei Richtungen ausgebildet ist.

5. Vorrichtung nach Anspruch 3 oder 4, bei der der Abweiser (15, 25) als mit der Fachwand (8) verbindbares und/oder verbundenes Aufsetzteil ausgebildet ist.

6. Vorrichtung nach einem der Ansprüche 3 bis 4, bei der der Abweiser (15, 25) als Teil der Fachwand (8) ausgebildet ist.

7. Vorrichtung nach einem der vorhergehenden Ansprüche, bei der der Schieber (11) derart ausgebildet ist, dass er an dem Stapel auch seitlich angreift.

## Claims

1. An apparatus for forming stacks, with
1.1 a plurality of individual compartments (9), which
1.2 are separated from one another by means of partition walls (8) and
1.3 are meant for receiving at least one particularly compressible object (12) each and
1.4 are moved along a closed path,
1.5 a slider (11), which
1.6 is formed for pushing out a stack of objects transverse to the direction of motion of the compartments (9),
**characterised by**
1.7 a device for enlarging the distance between two stacks at least in the area of the point of action of the slider (11) on the objects (12) forming the stack without enlarging the thickness of the partition wall.

2. An apparatus according to Claim 1, wherein the distance-enlarging device is formed in such a manner that the distance between the respectively last objects of both stacks is enlarged when said stacks are being pushed into the compartment (9).

3. An apparatus according to Claim 1 or 2, wherein the distance enlarging device features a wedge-like deflector (15, 25), whose tip (16) points opposite the direction in which the objects (12) are pushed into the compartments (9).

4. An apparatus according to Claim 3, wherein the deflector (25) is formed wedge-like in two directions.

5. An apparatus according to Claim 3 or 4, wherein the deflector (15, 25) is formed as an attachment and/or can be connected with the partition wall (8).

6. An apparatus according to one of Claims 3 to 4, wherein the deflector (15, 25) is formed as part of the partition wall (8).

7. An apparatus according to one of the preceding claims, wherein the slider (11) is formed in such a manner that it also acts laterally on the stack.

## Revendications

1. Dispositif destiné à former des piles, muni
1.1 d'une multitude de compartiments individuels (9) qui
1.2 sont séparés les uns des autres par des parois de compartiment (8) et
1.3 sont destinés à loger respectivement au moins un objet (12) notamment comprimable et
1.4 sont déplacés le long d'un trajet fermé,
1.5 d'un poussoir (11) qui
1.6 est exécuté pour pousser une pile d'objets transversalement au sens de déplacement des compartiments (9),
**caractérisé par**
1.7 un agencement destiné à augmenter l'écart entre deux piles au moins dans la partie d'attaque du poussoir (11) sur les objets (12) formant la pile, sans augmenter l'épaisseur de la paroi de compartiment.

2. Dispositif selon la revendication 1, dans lequel l'agencement d'augmentation d'écart est exécuté de telle manière que l'écart entre respectivement les derniers objets des deux piles est augmenté lors de l'insertion dans le compartiment (9).

3. Dispositif selon la revendication 1 ou 2, dans lequel l'agencement d'augmentation d'écart présente un butoir (15, 25) en forme de coin, dont la pointe (16) est orientée à l'opposé du sens d'insertion des objets (12) dans les compartiments (9).

4. Dispositif selon la revendication 3, dans lequel le butoir (25) est exécuté en forme de coin dans deux directions.

5. Dispositif selon la revendication 3 ou 4, dans lequel le butoir (15, 25) est exécuté en tant que pièce rapportée raccordable et/ou raccordée à la paroi de compartiment (8).

6. Dispositif selon l'une quelconque des revendications 3 à 4, dans lequel le butoir (15, 25) est exécuté en tant que partie de la paroi de compartiment (8).

7. Dispositif selon l'une quelconque des revendications précédentes, dans lequel le poussoir (11) est exécuté de telle manière qu'il a prise sur la pile également latéralement.
